# EUROPEAN PATENT SPECIFICATION

(11) **EP 3 650 515 B1**
(45) Date of publication and mention of the grant of the patent: **21.05.2025**
(21) Application number: 18827418.7
(22) Date of filing: 28.06.2018
(51) Int. Cl.: C09J 183/04, C09J 183/05, B32B 9/00, B32B 27/00, C08J 7/04, C09J 7/00, C09J 7/38, C09J 11/02, C09J 183/07, G02F 1/1333, G02F 1/1335, G09F 9/00

(54) **ORGANOPOLYSILOXANE COMPOSITION FOR FORMING PRESSURE SENSITIVE ADHESIVE LAYER AND USE OF SAME**
ORGANOPOLYSILOXANZUSAMMENSETZUNG ZUR HERSTELLUNG EINER HAFTKLEBERSCHICHT UND DEREN VERWENDUNG
COMPOSITION D'ORGANOPOLYSILOXANE POUR FORMER UNE COUCHE AUTO-ADHÉSIVE ET SON UTILISATION

(30) Priority: 07.07.2017 JP 2017133255
(43) Date of publication of application: 13.05.2020
(73) Proprietor: Dow Corning Toray Co., Ltd., Tokyo 100-0004 (JP)
(72) Inventor: ITOH, Maki, Ichihara-shi Chiba 299-0108 (JP); NAKAMURA, Akihiro, Ichihara-shi Chiba 299-0108 (JP); SUTO, Michitaka, Ichihara-shi Chiba 299-0108 (JP)
(74) Representative: Murgitroyd & Company
(86) International application number: PCT/JP2018/024553
(87) International publication number: WO 2019/009175

(56) References cited:
- WO-A1-2011/087146
- WO-A1-2012/166870
- WO-A1-2016/139955
- WO-A1-2016/200562
- JP-A- 2011 012 092
- JP-A- 2013 139 515
- JP-A- 2015 160 922
- JP-A- S6 433 176
- US-A- 5 110 882

## Description

### Technical Field

The present invention relates to a curable organopolysiloxane composition for forming a pressure sensitive adhesive layer; more particularly it relates to a curable organopolysiloxane composition with excellent curability for forming a pressure sensitive adhesive layer that firmly adheres to a base material of a display device, and more particularly relates to an organopolysiloxane composition with pressure sensitive adhesive layer forming properties used in an optical member, which can be designed so as to provide transparency and an appropriate adhesive force. Furthermore, the present invention relates to a pressure sensitive adhesive composition using the composition, a laminate using the composition, an application such as an electronic component or display device (including a touch panel).

### Background Technology

Polysiloxane pressure sensitive adhesive compositions have superior electrical insulation, heat resistance, cold resistance, and adhesion to various adherends as compared to acrylic or rubber pressure sensitive adhesive compositions, and therefore are used on heat resistant pressure sensitive adhesive tapes, electrically insulating pressure sensitive adhesive tapes, heat sealing tapes and plating masking tapes. Polysiloxane pressure sensitive adhesive compositions are classified into addition reaction curing types, condensation reaction curing types and peroxide curing types based on the curing mechanism. The addition reaction curing type pressure sensitive adhesive compositions are generally used because the composition is quickly cured by leaving to stand at room temperature or heating and a byproduct is not generated.

Taking advantage of high transparency and the aforementioned properties of the polysiloxane pressure sensitive adhesives, application to a field of advanced electronics displaying elements such as smart devices have been studied in recent years. The devices have a structure where a film containing a plurality of layers including an electrode layer and displaying layer is sandwiched between transparent base materials. The polysiloxane pressure sensitive adhesives with high heat resistance, cold resistance, and transparency are expected to effectively work for the purpose of protecting the electrode layer and displaying layer and improving adhesion between layers. For example, Japanese PCT Application 2014-522436 (Patent Document 1), Japanese PCT Application 2013-512326 (Patent Document 2), disclose manufacturing of an optically transparent silicone pressure sensitive adhesive film and a display device such as a touch panel using the film.

In these fields, and particularly in the field of silicone pressure sensitive adhesive films for optical applications, improvement of curability of silicone pressure sensitive adhesive films is strongly required from the perspective of improving a yield rate of an obtained display device, improving productivity and improving quality. Furthermore, in response to changes in a physical structure and diversification in display devices represented by flexible displays such as foldable displays, and curved displays for applications in vehicles, a silicone pressure sensitive adhesive film that can respond to various stress changes applied on a display device and that has a strong interlayer adhesive force is required, and improvement of adhesion of an adhesive layer to a base material is more strongly required than conventional. However, existing silicone pressure sensitive adhesive compositions and silicone pressure sensitive adhesive films obtained by curing the composition still have room for improvement in these properties.

On the other hand, with the addition curable polysiloxane pressure sensitive adhesive composition, a molar ratio (hereinafter, also referred to as "SiH/Vi ratio") of alkenyl groups and silicon-bonded hydrogen atom (SiH) groups included in the organopolysiloxane containing an alkenyl group as a main agent and organohydrogen polysiloxane as a crosslinking agent in the presence of a hydrosilylation reaction catalyst, tends to be widely proposed in the Patent Documents (for example, Patent Documents 3 to 8).

For example, in Patent Document 3 and Patent Document 8, a pressure sensitive adhesive composition with an SiH/Vi ratio that is within a range of 0.5 to 20 is proposed. There is instruction that when the ratio exceeds 20, crosslinking density increases, and a sufficient adhesive force (tack) cannot be achieved. It is suggested that when a pressure sensitive sheet is prepared, a usable time of the pressure sensitive adhesive composition during coating is reduced (for example, paragraph 0024 of Patent Document 3, paragraph 0028 of Patent Document 8).

Furthermore, Patent Document 5 (paragraph 0029, claim 29) discloses a silicone pressure sensitive adhesive with an SiH/Vi ratio of 1 to 30. However, a composition disclosed in an optimal range and example is limited to a composition having an SiH/Vi ratio of 1 to 10. Similarly, Patent Document 7 (paragraph 0025, claim 6) discloses a silicone pressure sensitive adhesive composition with excellent transparency and having an SiH/Vi ratio of 1 to 40. However, compositions in an optimal range and disclosed in the examples are limited to a composition having an SiH/Vi ratio of 1 to 10.

Furthermore, the present applicant proposes a silicone pressure sensitive adhesive with an SiH/Vi ratio within a range of 1 to 20 in Patent Document 4 (upper right column on page 3 of the document), and proposes a silicone pressure sensitive adhesive with an SiH/Vi ratio within a range of 2 to 50 in Patent Document 6 (paragraph 0032, claim 1). However, a composition disclosed in an optimal range and example in Patent Document 5 is limited to a composition with an SiH/Vi ratio within a range of 1 to 20.

As described above, not only is a silicone pressure sensitive adhesive with an SiH/Vi ratio exceeding 20 not specifically disclosed in any of the Patent Documents, but when a person with ordinary skill in the art performs actual composition design, there is a description that provides incentive to design an addition curable silicon pressure sensitive adhesive composition with an SiH/Vi ratio that is less than 20 or less than 10. Therefore, the Patent Documents are not intended to describe or teach a person with ordinary skill in the art to select an SiH/Vi ratio exceeding 20 and instead prevents a person with ordinary skill in the art from selecting the SiH/Vi ratio.

### Prior Technology Documents

### Patent Documents

Patent Document 1: Japanese PCT Application 2014-522436
Patent Document 2: Japanese PCT Application 2013-512326
Patent Document 3: JP 2004-168808 A
Patent Document 4: JP S63-022886 A
Patent Document 5: JP H05-214316 A
Patent Document 6: JP 2011-012092 A
Patent Document 7: Japanese PCT Application 2014-522436
Patent Document 8: JP 2007-326312 A
US5110882A discloses a pressure-sensitive adhesive obtained from a composition which contains an alkenyl group-containing silicone polymer, a tackifying silicone resin having less than one percent hydroxyl content, an organohydrogenpolysiloxne curing agent for the alkenyl group-containing silicone polymer and a platinum-containing catalyst. The composition can be cured to a silicone pressure-sensitive adhesive by heating at relatively low temperatures.
WO2012166870A1 discloses a pressure sensitive adhesive (PSA) formulation that exhibits optical transmittance that is at least 80% in both uncured and cured states. A PSA laminated structure is also disclosed in which the PSA formulation has a Si-H:vinyl ratio and coating thickness that provides for a very stable and low release force from a fluorosilicone release coating applied to a backing sheet or liner.

### Summary of the Invention

### Problem to be Solved by the Invention

In order to resolve the aforementioned problems, an object of the present invention is to provide a curable organopolysiloxane composition with excellent curability, which forms a pressure sensitive adhesive layer that firmly adheres to a base material of a display device. Furthermore, an object of the present invention is to provide a use for the curable organopolysiloxane composition and cured product thereof as a pressure sensitive adhesive layer, a use as an electronic material or display device member, and an electronic component or display device provided therewith.

### Means for Solving Problems

As a result of extensive studies of the aforementioned problems, the present inventors achieved the present invention. In other words, one object of the present invention was achieved by an organopolysiloxane composition with pressure sensitive adhesive layer forming properties, comprising: (A) an organopolysiloxane having an average of more than one alkenyl group in a molecule, comprising a mixture of (A1) a raw rubber-like organopolysiloxane containing an alkenyl group, having a viscosity at 25°C of 100,000 mPa·s or more, or a degree of plasticity as measured in accordance with a method stipulated in JIS K6249 within a range of 50 to 200, and (A2) an organopolysiloxane containing an alkenyl group with a viscosity at 25°C that is less than 100,000 mPa·s, and a mass ratio of both components is within a range of 50:50 to 100:0, and an amount of a vinyl (CH₂ = CH) moiety in an alkenyl group in component (A1) is within a range of 0.005 to 0.400 wt.%; (B) an organopolysiloxane resin wherein at least a portion of component (B) is (B1) a resin that contains an R₃SiO_{1/2} unit (M unit) and an SiO_{4/2} unit (Q unit), and may have a hydroxyl group or hydrolyzable group (where R represents a monovalent organic group and 90 mol% or more of R is a phenyl group or alkyl group with 1 to 6 carbon atoms); and component (B) is within a range of 1 to 500 parts by mass with regard to 100 parts by mass of a sum of component (A) and component (C) in the composition; (C) an organohydrogen polysiloxane having at least two Si-H bonds in a molecule; and (D) a hydrosilylation reaction catalyst; where an amount of component (C) is an amount where a ratio (molar ratio) of an amount (substance amount) of an SiH group in component (C) with regard to a sum of an amount (substance amount) of alkenyl groups in component (A) and amount (substance amount) of alkenyl groups in component (B) is 20 to 60; and each viscosity is measured using a rotational viscometer in accordance with JIS K7117-1. Furthermore, the aforementioned problem can be achieved by a curable organopolysiloxane composition, use of a cured product thereof as a pressure sensitive adhesive layer, use of the cured product as an electronic material or display device member, and an electronic component or display device provided therewith.

In summary, the present invention is:
"[1] An organopolysiloxane composition with pressure sensitive adhesive layer forming properties, comprising:
   (A) an organopolysiloxane having an average of more than one alkenyl group in a molecule, comprising a mixture of (A1) a raw rubber-like organopolysiloxane containing an alkenyl group, having a viscosity at 25°C of 100,000 mPa·s or more, or a degree of plasticity as measured in accordance with a method stipulated in JIS K6249 within a range of 50 to 200, and (A2) an organopolysiloxane containing an alkenyl group with a viscosity at 25°C that is less than 100,000 mPa·s, and a mass ratio of both components is within a range of 50:50 to 100:0, and an amount of a vinyl (CH₂ = CH) moiety in an alkenyl group in component (A1) is within a range of 0.005 to 0.400 wt.%;
   (B) an organopolysiloxane resin wherein at least a portion of component (B) is (B1) a resin that contains an R₃SiO_{1/2} unit (M unit) and an SiO_{4/2} unit (Q unit), and may have a hydroxyl group or hydrolyzable group (where R represents a monovalent organic group and 90 mol% or more of R is a phenyl group or alkyl group with 1 to 6 carbon atoms); and component (B) is within a range of 1 to 500 parts by mass with regard to 100 parts by mass of a sum of component (A) and component (C) in the composition;
   (C) an organohydrogen polysiloxane having at least two Si-H bonds in a molecule; and
   (D) a hydrosilylation reaction catalyst; where
      an amount of component (C) is an amount where a ratio (molar ratio) of an amount (substance amount) of an SiH group in component (C) with regard to a sum of an amount (substance amount) of alkenyl groups in component (A) and amount (substance amount) of alkenyl groups in component (B) is 20 to 60; and
      each viscosity is measured using a rotational viscometer in accordance with JIS K7117-1;
[2] The organopolysiloxane composition with pressure sensitive adhesive layer forming properties according to [1], where the component (A) is a mixture of the component (A1) and (A2) and the mass ratio of components (A1) and (A2) is within a range of 75:25 to 100:0;
[3] The organopolysiloxane composition with pressure sensitive adhesive layer forming properties according to any one of [1] to [2], where a viscosity of the composition after 8 hours at room temperature from preparing the composition is within 1.5 times a viscosity of the composition immediately after preparing the composition, and curing is possible at 80 to 200°C;
[4] The organopolysiloxane composition with pressure sensitive adhesive layer forming properties according to any one of [1] to [3], where a cured layer having a thickness of 100 µm obtained by curing the composition is essentially transparent, and
   a polymethyl methacrylate sheet with a thickness of 2 mm provided with a 50 µm thick cured layer obtained by curing the composition has an adhesive force as measured at a tensile rate of 300 mm/min using a 180° peeling test method in accordance with JIS Z 0237 of 0.02 N/25 mm or more;
[5] A pressure sensitive adhesive composition, comprising the organopolysiloxane composition with pressure sensitive adhesive layer forming properties according to any one of [1] to [4];
[6] The pressure sensitive adhesive layer according to [5], which is film-like and essentially transparent;
[7] A laminate, containing a pressure sensitive adhesive layer obtained by curing the organopolysiloxane composition with pressure sensitive adhesive layer forming properties according to any one of [1] to [4] on a film-like base material;
[8] The laminate according to [7], where a release layer for the pressure sensitive adhesive layer is provided on 1 or more film-like base materials;
[9] The laminate according to [7] or [8], containing:
   a film-like base material;
   a first release layer formed on the film-like base material;
   a pressure sensitive adhesive layer formed by coating and curing the organopolysiloxane composition with pressure sensitive adhesive layer forming properties according to any one of [1] to [6] on the release layer; and
   a second release layer laminated on the pressure sensitive adhesive layer;
[10] A member for a display device or an electronic material, obtained by curing the organopolysiloxane composition with pressure sensitive adhesive layer forming properties according to any one of [1] to [4];
[11] An electronic component or display device, containing the member for a display device or the electronic material according to [10];
[12] A display panel or a display, containing the film-like and essentially transparent pressure sensitive adhesive layer according to [6];
[13] A touch panel, containing a pressure sensitive adhesive layer obtained by curing the organopolysiloxane composition with pressure sensitive adhesive layer forming properties according to any one of [1] to [4] adhered to a base material where a conductive layer is formed on one surface and to the conductive layer of the base material or on a surface opposite thereof; and
[14] The touch panel according to [13], where the base material where the conductive layer is formed is a resin film or glass sheet where an ITO layer is formed on one surface.

### Effect of the Invention

An organopolysiloxane composition with pressure sensitive adhesive layer forming properties of the present invention has excellent adhesion and curability by a hydrosilylation reaction, can firmly adhere to a base material of a display device, and can form a pressure sensitive adhesive layer that can be designed to have high transparency. Furthermore, the curable organopolysiloxane composition or cured product thereof can be suitably used as a pressure sensitive adhesive layer, and electronic material, or member for a display device. An electronic component for display device provided therewith can form a pressure sensitive adhesive layer that is less likely to cause curing defect problems of a pressure sensitive adhesive film and adhesion defect problems with regard to a base material of a display device. Therefore, advantages are provided where industrialization is simple and performance of a laminate of an obtained display device can be improved. In particular, a display device can be obtained such as a display panel, display or touch panel, provided with a pressure sensitive adhesive layer obtained by curing the organopolysiloxane composition according to the present invention.

### Description of the Preferred Embodiments

Organopolysiloxane Composition with Pressure Sensitive Adhesive Layer Forming Properties
First, an organopolysiloxane composition with pressure sensitive adhesive layer forming properties according to the present invention will be described. The composition forms a cured layer with pressure sensitive adhesive properties that firmly adheres to a base material of a display device by a curing reaction including a hydrosilylation reaction, and is less likely to cause a curing defect problem. Hereinafter, components and technical characteristics of an SiH/Vi ratio range will be described.

As described above, the organopolysiloxane composition of the present invention is cured by a hydrosilylation reaction to form a pressure sensitive adhesive layer having a constant adhesive force, and therefore at least contains the following components (A) to (D).
(A) An organopolysiloxane having an average of more than one alkenyl group in a molecule, comprising a mixture of (A1) a raw rubber-like organopolysiloxane containing an alkenyl group, having a viscosity at 25°C of 100,000 mPa·s or more, or a degree of plasticity as measured in accordance with a method stipulated in JIS K6249 within a range of 50 to 200, and (A2) an organopolysiloxane containing an alkenyl group with a viscosity at 25°C that is less than 100,000 mPa·s, and a mass ratio of both components is within a range of 50:50 to 100:0, and an amount of a vinyl (CH₂ = CH) moiety in an alkenyl group in component (A1) is within a range of 0.005 to 0.400 wt.%;
(B) An organopolysiloxane resin wherein at least a portion of component (B) is (B1) a resin that contains an R₃SiO_{1/2} unit (M unit) and an SiO_{4/2} unit (Q unit), and may have a hydroxyl group or hydrolyzable group (where R represents a monovalent organic group and 90 mol% or more of R is a phenyl group or alkyl group with 1 to 6 carbon atoms); and component (B) is within a range of 1 to 500 parts by mass with regard to 100 parts by mass of a sum of component (A) and component (C) in the composition;
(C) An organohydrogen polysiloxane having at least two Si-H bonds in a molecule wherein an amount of the component (C) is an amount such that a ratio (molar ratio) of an amount (moles) of SiH groups in component (C) with regard to a sum of an amount (moles) of alkenyl groups in component (A) and amount (moles) of alkenyl groups in component (B) is 20 to 60; and
(D) A hydrosilylation reaction catalyst
Furthermore, the composition contains a hydrosilylation reaction catalyst, and therefore optionally contains (E) a curing retarder from the perspective of handling workability. The composition may contain another additives within a range that is consistent with an object of the present invention. Hereinafter, the components will be described.

Organopolysiloxane containing an alkenyl group of the component (A) is a main agent (base polymer) of the composition, and contains an alkenyl group bonded to more than one silicon atom on average in one molecule. A preferred number of alkenyl groups is 1.5 or more in one molecule. Examples of an alkenyl group of the organopolysiloxane in the component (A) include vinyl groups, allyl groups, butenyl groups, pentenyl groups, hexenyl groups, heptenyl groups, and other alkenyl groups with 2 to 10 carbon atoms. Vinyl groups and hexenyl groups are particularly preferable. Examples of a bonding position of the alkenyl group in the component (A) include ends of a molecular chain and/or side chains of a molecular chain. Note that the component (A) may contain only a single component, or may be a mixture of two or more different components.

Examples of organic groups bonded to a silicon atom other than the alkenyl group in the organopolysiloxane in the component (A) include: methyl groups, ethyl groups, propyl groups, butyl groups, pentyl groups, hexyl groups, heptyl groups, and other alkyl groups; phenyl groups, tolyl groups, xylyl groups, naphthyl groups, and other aryl groups; benzyl groups, phenethyl groups, and other aralkyl groups; chloromethyl groups, 3-chloropropyl groups, 3,3,3-trifluoropropyl groups, and other halogenated alkyl groups. Methyl groups or phenyl groups are particularly preferable.

A molecular structure of component (A) is preferably a straight chain or a straight chain having a partial branch (branched chain) for example, and may partially contain a cyclic shape or three-dimensional network. A straight chain or branched chain diorganopolysiloxane is preferable, where a main chain is formed from repeating diorganosiloxane units, and where both ends of a molecular chain are blocked by a triorganosiloxy group. Note that a siloxane unit that provides a branched chain organopolysiloxane is a T unit or Q unit described later.

The properties of component (A) at room temperature may be oil-like or rubber-like, and the viscosity of component (A) is preferably 50 mPa·s or more at a temperature of 25°C, and particularly preferably 100 mPa·s or more. At least a portion of the component (A) is (A1) a raw rubber-like organopolysiloxane containing an alkenyl group having a viscosity of 100,000 mPa·s or more at 25°C or having a degree of plasticity (value when a load of 1 kgf is applied for 3 minutes on 4.2 g of spherical sample at 25°C) as measured in accordance with a method specified in JIS K6249 that is within a range of 50 to 200, and more preferably within a range of 80 to 180.

Note that in the organopolysiloxanes containing an alkenyl group, volatile or low molecular weight siloxane oligomers (such as octamethyl tetrasiloxane (D4), decamethyl pentasiloxane (D5)) are preferably reduced or removed for the purpose of preventing a contact fault. Although the extent thereof can be designed as desired, the entire component (A) may be set to less than 1 mass%, and the siloxane oligomers may be set to less than 0.1 mass%. The amount may be reduced to near a detection limit if necessary.

An amount of the alkenyl group in the component (A1) is not particularly limited, but from the perspective of technical effects of the present invention, an amount of a vinyl (CH₂=CH) moiety in the alkenyl group in the component (A1) (hereinafter, referred to as "vinyl amount") is within a range of 0.005 to 0.400 wt.%, and preferably within a range of 0.005 to 0.300 wt.%.

The component (A) with a lower viscosity than the component (A1) is also used in the component (A) of the present invention. Specifically, (A2) an organopolysiloxane containing an alkenyl group with a viscosity that is less than 100,000 mPa·s at 25°C is also used. Herein, examples other than the viscosity of component (A2) are similar to component (A1). In particular, when component (A2) with a low viscosity is used in combination with component (A1), handling workability may be improvable when adding the hydrosilylation reaction catalyst, which is component (C), described later.

From the perspective of technical effects of the present invention, 50% by mass or more of the component (A) is preferably an organopolysiloxane containing an alkenyl group with a high degree of polymerization serving as the component (A1), and 75 to 100% by mass is particularly preferably the component (A1). In other words, the component (A1) (= organopolysiloxane containing an alkenyl group with a high degree of polymerization) and component (A2) (= organopolysiloxane containing an alkenyl group with a lower degree of polymerization) are both used as the component (A), a mass ratio of both is within a range of 50:50 to 100:0, and more preferably within a range of 75:25 to 100:0 or 75:25 to 90:10.

The organopolysiloxane resin (B) is an adhesion providing component that provides an adhesive force on a base material, and is not particularly limited so long as the organopolysiloxane has a three-dimensional structure. Examples can include: resins containing an R₂SiO_{2/2} unit (D unit) and RSiO_{3/2} unit (T unit) (where R represents a mutually independent monovalent organic group) and that has or does not have a hydroxyl group or hydrolyzable group; resins independently containing a T unit and that has does or does not have a hydroxyl group or hydrolyzable group; resins containing an R₃SiO_{1/2} unit (M unit) and SiO_{4/2} unit (Q unit) and that has or does not have a hydroxyl group or hydrolyzable group. In accordance with the present invention at least a portion of component (B) is (B1) a resin containing an R₃SiO_{1/2} unit (M unit) and SiO_{4/2} unit (Q unit) and that has a hydroxyl group or hydrolyzable group (also referred to as an MQ resin) and where R represents a monovalent organic group and 90 mol% or more of R is a phenyl group or alkyl group with 1 to 6 carbon atoms. Note that the hydroxyl group or hydrolyzable group is a group is directly bonded to silicon such as a T unit or Q unit, in the resin, and is a group derived from a silane serving as a raw material or produced as a result of hydrolyzing a silane.

The monovalent organic group of R is preferably a monovalent hydrocarbon group with 1 to 10 carbon atoms, and examples include alkyl groups with 1 to 10 carbon atoms, alkenyl groups with 2 to 10 carbon atoms, aryl groups with 6 to 10 carbon atoms, cycloalkyl groups with 6 to 10 carbon atoms, benzyl groups, phenylethyl groups, and phenylpropyl groups. In particular, 90 mol% or more of R is preferably an alkyl group with 1 to 6 carbon atoms or a phenyl group, and 95 to 100 mol% of R is particularly preferably a methyl group or phenyl group.

When the organopolysiloxane resin (B) is a resin containing an R₃SiO_{1/2} unit (M unit) and SiO_{4/2} unit (Q unit), a molar ratio of M units to Q units is preferably 0.5 to 2.0. This is because when the molar ratio is less than 0.5, an adhesive force to a base material is reduced, and when the molar ratio is more than 2.0, a cohesive force of a substance configuring a pressure sensitive adhesive layer is reduced. Furthermore, a D unit and Q and T units can be included in the component (B), and the component (B) can be used in combination with two or more types of organopolysiloxanes, within a scope that does not impair the properties of the present invention. The organopolysiloxane resin (B) may have a hydroxyl group or hydrolyzable group, and a resin having a hydroxyl group or hydrolyzable group, a resin not having a hydroxyl group or hydrolyzable group, or a mixture thereof can be used without limitation. When the organopolysiloxane resin has a hydroxyl group or hydrolyzable group, 0.1 to 5.0% by mass of the hydroxyl group or hydrolyzable group is normally included. Note that in the organopolysiloxane resins, a low molecular weight siloxane oligomer may be reduced or removed for the purpose of preventing a contact fault.

The component (C) is an organohydrogen polysiloxane having two or more Si-H bonds in a molecule, and is a crosslinking agent of the organopolysiloxane composition according to the present invention. A molecular structure of component (C) is not limited, and examples include straight chains, straight chains partially having a branch, branched chains, cyclic forms, and organopolysiloxane resins. The molecular structure is preferably a straight chain, straight chain partially having a branch, or an organopolysiloxane resin. A bonding position of a silicon-bonded hydrogen atom is not particularly limited, and examples include molecular chain ends, side chains, and both.
An amount of the silicon-bonded hydrogen atom is preferably 0.1 to 2.0 wt.%, and more preferably 0.5 to 1.7 wt.%.

Examples of the organic group bonded to a silicon atom include: methyl groups, ethyl groups, propyl groups, butyl groups, octyl groups, and other alkyl groups with 1 to 8 carbon atoms; phenyl groups, tolyl groups, and other aryl groups; benzyl groups, phenethyl groups, and other aralkyl groups; and 3-chloropropyl groups, 3,3,3-trifluoropropyl groups, and other halogenated alkyl groups. However, 50 mol% or more of the total number thereof is preferably an alkyl group with 1 to 8 carbon atoms or a phenyl group. Another organic group is preferably a methyl group or phenyl group from the perspective of ease of manufacturing and compatibility the aforementioned preferred component (A) and component (B).

When component (C) according to the present invention is an organohydrogen polysiloxane as an organopolysiloxane resin, examples include: organopolysiloxane copolymers containing a siloxane unit as expressed by general formula: R'₃SiO_{1/2}, siloxane unit as expressed by general formula: R'₂HSiO_{1/2}, and siloxane unit as expressed by formula: SiO_{4/2}; organopolysiloxane copolymers containing a siloxane unit as expressed by general formula: R'₂HSiO_{1/2}and siloxane unit as expressed by general formula: SiO_{4/2}; organopolysiloxane copolymers containing a siloxane unit as expressed by general formula R'₂HSiO_{1/2} and siloxane unit as expressed by general formula: R"SiO_{3/2}; organopolysiloxane copolymers containing a siloxane unit as expressed by general formula: R'HSiO_{2/2}, and siloxane unit as expressed by general formula: R'SiO_{3/2}, or siloxane unit as expressed by formula: HSiO_{3/2}; and mixtures of two or more types of the organopolysiloxanes. Note that R' in the formula represents an alkyl group with 1 to 8 carbon atoms, an aryl group, an aralkyl group, or halogenated alkyl group, and the same groups as described above are exemplified.

Specific examples of the component (C) include tris (dimethyl hydrogen siloxy) methylsilane, tetra (dimethyl hydrogen siloxy) silane, methylhydrogen polysiloxane blocked with a trimethylsiloxy group at both ends, dimethylsiloxane blocked with a trimethylsiloxy group at both ends / methylhydrogen siloxane copolymers, dimethylsiloxane blocked with a dimethyl hydrogen siloxy group at both ends / methylhydrogen siloxane copolymers, cyclic methylhydrogen oligosiloxane, cyclic methylhydrogen siloxane / dimethylsiloxane copolymers, methylhydrogen siloxane blocked with a trimethylsiloxy group at both ends of a molecular chain / diphenylsiloxane copolymers, methylhydrogen siloxane blocked with a trimethylsiloxy group at both ends of a molecular chain / diphenylsiloxane / dimethylsiloxane copolymers, hydrolytic condensates of trimethoxysilane, copolymers containing a (CH₃)₂HSiO_{1/2} unit and SiO_{4/2} unit, copolymers containing a (CH₃)₂HSiO_{1/2} unit, SiO_{4/2} unit, and (C₆H₅)SiO_{3/2} unit, copolymers containing a (CH₃)₂HSiO_{1/2} unit and CH₃SiO_{3/2} unit, and mixtures of two or more thereof.

For a straight chain, a methylhydrogen polysiloxane is particularly preferable, which is expressed by molecular structural formula:

R^{T}Me₂SiO(Me₂SiO)_{q}(HMeSiO)ᵣSiMe₂R^{T} (7)

(Where Me represents a methyl group; RT represents a methyl group or hydrogen atom, q and r are numbers satisfying a relationship of 0.3 ≦ r / (q + r) ≦ 1 and 10 ≦ (q + r) ≦ 200). Note that component (C) may be used in combination with two or more different components.

Similarly, the following organosiloxanes are exemplified. Note that in the formula, Me and Ph respectively represents a methyl group and phenyl group, m represents an integer between 1 and 100, n represents an integer between 1 and 50, and b, c, d, and e represent a positive number. However, the total of b, c, d, and e in one molecule is 1.

HME₂SiO(Ph₂SiO)ₘSiMe₂H

HMePhSiO(Ph₂SiO)ₘSiMePhH

HMePhSiO(Ph₂SiO)ₘ(MePhSiO)ₙSiMePhH

HMePhSiO(Ph₂SiO)ₘ(Me₂SiO)ₙSiMePhH

(HMe₂SiO_{1/2})_{b}(PhSiO_{3/2})_{c}

(HMepHSiO_{1/2})_{b}(PhSiO_{3/2})_{c}

(HMePhSiO_{1/2})_{b}(HMe₂SiO_{1/2})_{c}(PhSiO_{3/2})_{d}

(HMe₂SiO_{1/2})_{b}(Ph₂SiO_{2/2})_{c}(PhSiO_{3/2})_{d}

(HMePhSiO_{1/2})_{b}(Ph₂SiO_{2/2})_{c}(PhSiO_{3/2})_{d}

(HMePhSiO_{1/2})_{b}(HMe₂SiO_{1/2})_{c}(Ph₂SiO_{2/2})_{d}(PhSiO_{3/2})ₑ

### SiH/Vi Ratio

The composition of the present invention is characterized by having a high SiH/Vi ratio that achieves technical effects thereof. In other words, an amount of component (C) used in the composition of the present invention may be a substance amount of a silicon-bonded hydrogen atom (SiH) group in component (C) with regard to the total amount of the alkenyl groups in component (A) (substance amount) and of the alkenyl groups in component (B) (substance amount) in the composition. In other words, the molar ratio may be within a range of 20 to 60, a range of 22 to 50, and a range of 25 to 40.

An amount of the SiH group must be the lower limit, in other words, 20 or more, preferably over 20, and more preferably 22 or more. When the amount of the SiH group is lower than the lower limit, curability of the composition is reduced, which may cause curing defects. Furthermore, a technical effect of improving adhesion to a base material may not be achieved. On the other hand, when the amount of the SiH group exceeds the upper limit, an amount of a curing agent remaining without reacting increases, and thus an adverse effect such as a cured product being brittle and a problem such as gas generating may occur.

An effect of improving curing defects of the composition is considered as follows. The organopolysiloxane composition according to the present invention must form a pressure sensitive cured layer, and therefore, an organopolysiloxane resin and organopolysiloxane containing an alkenyl group having a high degree of polymerization are generally primarily used. The components tend to have a low number of alkenyl groups in a molecule and low density of alkenyl groups in the composition, as compared to a vinyl polysiloxane having a low degree of siloxane polymerization used for silicone sealants. At this time, in the case that the hydrosilylation reaction catalyst (D) described later is added, when an organopolysiloxane containing an alkenyl group with a lower degree of polymerization than component (A1) is used, the density of alkenyl groups in a molecule is relatively high in the siloxanes with a low degree of polymerization. Therefore, a hydrosilylation reaction may locally advance in a vicinity of the organopolysiloxane containing an alkenyl group with a low degree of polymerization as compared to component (A1). Thus, a bias may occur in a curing reaction in the composition, leading to curing defects and low curability. Note that in particular, a pressure sensitive adhesive layer is generally industrially cured within 1 minute to 10 minutes, and using a long curing process is often difficult in order to uniformly advance a reaction.

However, as described above, the amount of SiH is designed to be in large excess such that the SiH/Vi ratio is 20 or more, and preferably 22 or more, and therefore, even if a portion where the density of alkenyl groups is relatively low exists in the composition, a hydrosilylation reaction is more likely to advance quickly. It is thought that a pressure sensitive adhesive layer where the entire composition is uniformly crosslinked is formed without problems of curing defects and curing delay.

Furthermore, in the present invention, the amount of SiH is designed to be in large excess, and therefore, a large amount of unreacted silicon-bonded hydrogen atoms (SiH) remain in the pressure sensitive adhesive layer after crosslinking. Thus, a bonding force between the pressure sensitive adhesive layer and a base material surface may occur based on an interaction with a hydroxyl group present on the base material surface. As a result, adhesion with regard to a base material is considered to be improved.

For the mass ratio, the component (B) is preferably 1 to 500 parts by mass, and more preferably 30 to 400 parts by mass with regard to a total of 100 parts by mass of the component (A) and component (C) in the composition, for the purpose of technical effects of the present invention, and particularly for use as a pressure sensitive adhesive layer. This is because if the amount of the component (B) is less than the lower limit or exceeds the upper limit, an adhesive force may be insufficient.

### Hydrosilylation Reaction Catalyst

The organopolysiloxane composition according to present invention contains a hydrosilylation reaction catalyst. Examples of the hydrosilylation reaction catalyst include platinum-based catalysts, rhodium-based catalysts, and palladium-based catalysts; platinum-based catalysts are preferable because curing of the present composition can be significantly promoted. Examples of the platinum-based catalysts include fine platinum powders, chloroplatinic acids, alcohol solutions of chloroplatinic acids, platinum-alkenylsiloxane complexes, platinum-olefin complexes, and platinum-carbonyl complexes. Platinum-alkenyl siloxane complexes are particularly preferable. Examples of the alkenylsiloxanes include 1,3-divinyl-1,1,3,3-tetramethyl disiloxane, 1,3,5,7-tetramethyl-1,3,5,7-tetravinyl cyclotetrasiloxane, alkenylsiloxanes where a portion of methyl groups in the alkenylsiloxanes is substituted with an ethyl group, phenyl group, a group selected from groups consisting of nitriles, amides, dioxolanes, and sulfolanes, , and alkenylsiloxanes where a vinyl group in the alkenylsiloxanes is substituted with an aryl group or hexenyl group. A 1,3-divinyl-1,1,3,3,-tetramethyl disiloxane is particularly preferable, because stability of the platinum-alkenylsiloxane complex is favorable. Note that a non-platinum-based metal catalyst such as iron, ruthenium and iron/cobalt, may be used as the catalyst promoting the hydrosilylation reaction.

In the present invention, an amount of the hydrosilylation reaction catalyst is not particularly limited. However, the amount is within a range where an amount of the platinum-based metal is within a range of 0.1 to 200 pm, and may be within a range of 0.1 to 150 ppm, 0.1 to 100 ppm, or 0.1 to 50 ppm, with regard to a total amount of solid content in the composition. Herein, the platinum-based metal is a group VIII metal element including platinum, rhodium, palladium, ruthenium, and iridium, and an amount of a platinum metal excluding a ligand of the hydrosilylation catalyst is preferably within the aforementioned range in practice. Note that "solid content" is a component forming a cured layer (primarily main agents, components providing adhesion, crosslinking agents, catalysts, and other nonvolatile components) when the organopolysiloxane composition according to the present invention is cured, and does not contain a volatile component such as a solvent volatilizing during heat curing.

When the amount of the platinum-based metal in the organopolysiloxane composition according to the present invention is 50 ppm or less (45 ppm or less, 35 ppm or less, 30 ppm or less, 25 ppm or less, or 20 ppm or less), in particular, discoloration or coloring of a transparent pressure sensitive adhesive layer may be suppressed after curing or when exposed to heat or high energy rays such as ultraviolet rays. On the other hand, from the perspective of curability of the organopolysiloxane composition, the amount of the platinum-based metal is 0.1 ppm or more, and when lower than the lower limit, curing defects may occur.

The component (E) is a curing retarder, which is added to suppress a crosslinking reaction between an alkenyl group in the composition and SiH group in the component (C), extend a usable time at ambient temperature, and improve storage stability. Therefore, in practice, the component is almost essential to the organopolysiloxane composition with pressure sensitive adhesive layer forming properties of the present invention.

Specific examples of the component (E) include acetylene compounds, enyne compounds, organic nitrogen compounds, organic phosphorus compounds, and oxime compounds. Even more specific examples include: 3-methyl-1-butyn-3-ol, 3,5-dimethyl-1-hexyn-3-ol, 3-methyl-1-pentyn-3-ol, 1-ethynyl-1-cyclohexanol, phenylbutynol, and other alkyne alcohols; 3-methyl-3-penten-1-yne, 3,5-dimethyl-1-hexyn-3-yne, and other enyne compounds; 1,3,5,7-tetramethyl-1,3,5,7-tetravinyl cyclotetrasiloxane, 1,3,5,7-tetramethyl-1,3,5,7-tetrahexenyl cyclotetrasiloxane, and other methylalkenyl cyclosiloxanes; and benzotriazoles.

From the perspective of curing behavior of the composition, the organopolysiloxane composition with pressure sensitive adhesive layer forming properties of the present invention preferably has an increase in viscosity of 1.5 times or less for 8 hours at room temperature after preparing the composition, and preferably can be cured at 80 to 200°C. "Suppressing an increase in viscosity" is important from the perspective of handling workability, pot life, and properties after curing. This is because curability can be ensured by curing higher than a certain high temperature (80 to 200°C) even a large excess of component (C) is included and the amount of the platinum-based metal is optionally reduced. Note that the composition can be achieved by selecting a suitable combination of the aforementioned components, hydrosilylation catalyst, and component (E).

The organopolysiloxane composition of the present invention may contain an organic solvent as a solvent in addition to the suitable component (A) and component (B). The type and amount of the organic solvent are adjusted in consideration of coating workability. Examples of the organic solvent include, toluene, xylene, benzene, and other aromatic hydrocarbon solvents, heptane, hexane, octane, isoparaffin, and other aliphatic hydrocarbon solvents, ethyl acetate, isobutyl acetate, and other ester solvents, diisopropyl ether, 1,4-dioxane, and other ether solvents, trichloroethylene, perchloroethylene, methylene chloride, and other chlorinated aliphatic hydrocarbon solvents and solvent volatile oils. Two or more types may be combined based on the wettability of a sheet-like base material. An amount of the organic solvent added is preferably an amount where a mixture of the component (A) to component (C) can be uniformly coated on a surface of a sheet-like base material, for example, 5 to 3000 parts by mass per a total of 100 parts by mass of the component (A), component (B), and component (C).

The organopolysiloxane composition according to the present invention can optionally contain a component other than the aforementioned components within a scope that does not impair a technical effect of the present invention. Examples can include adhesion promoters; polydimethyl siloxane, polydimethyl diphenyl siloxane, and other nonreactive organopolysiloxanes; phenol-based, quinone-based, amine-based, phosphorus-based, phosphite-based, sulfur-based, and thioether-based antioxidants; triazole, benzophenone, and other light stabilizers; phosphate ester-based, halogen-based, phosphorus-based, antimony-based flame retardants; one or more types of antistatic agents such as cationic surfactants, anionic surfactants, and nonionic surfactants. Note that a pigment, dye or inorganic fine particles, can be optionally added in addition to these components, but an optional component that impairs optical properties such as transparency and causes coloring of a pressure sensitive adhesive layer is preferably not added.

A method of preparing the organopolysiloxane composition according to the present invention is not particularly limited, and is performed by homogenously mixing the components. A solvent may be added if necessary, and may be prepared by mixing at a temperature of 0 to 200°C using a conventionally known stirrer or kneader.

The organopolysiloxane composition of the present invention is coated on a base material to form a coating film, and is heated under a temperature condition of 80 to 200°C, and preferably under a temperature condition of 90 to 190°C to form a cured product. Examples of a coating method include gravure coating, offset coating, offset gravure, roll coating, reverse roll coating, air knife coating, curtain coating, and comma coating.

### Range of Pressure Sensitive Adhesion and Adhesive Force

The organopolysiloxane composition of the present invention has a cured layer obtained by curing the composition by a hydrosilylation reaction that is pressure sensitive adhesive. The pressure sensitive adhesive layer of the present invention can be designed to have an adhesive force within a range similar to a silicone pressure sensitive adhesive with an SiH/Vi ratio that is less than 20, and has excellent adhesion of an adhesive layer to a base material. Therefore, in practice, the pressure sensitive adhesive layer of the present invention can be used to replace a conventionally known silicone pressure sensitive adhesive as desired.

Specifically, a polymethyl methacrylate sheet with a thickness of 2 mm provided with a 50 µm thick cured layer obtained by curing the organopolysiloxane composition of the present invention has an adhesive force as measured at a tensile rate of 300 mm/min using a 180° peeling test method in accordance with JIS Z 0237 of 0.02 N/25 mm or more. Note that the aforementioned thickness (50 µm) is a thickness of the cured layer itself, which serves as a reference for objectively defining an adhesive force of the cured layer according to the present invention. The organopolysiloxane composition of the present invention is not limited to a thickness of 50 µm, and it goes without saying that a cured layer or pressure sensitive adhesive layer with an arbitrary thickness can be used.

The 50 µm thick cured layer has an insufficient function as a pressure sensitive adhesive layer when the adhesive force is less than the aforementioned lower limit. Note that a pressure sensitive adhesive layer where the adhesive force is within a range of 0.02 to 35 N/25 mm can generally be designed by using a component described later.

In particular, the 50 µm thick cured layer preferably has an adhesive force under the aforementioned conditions that is 1.0 N/25 mm, and more preferably 2.0 N/25 mm from the perspective of use as a pressure sensitive adhesive layer for a display device.

### Properties Related to Transparency, Color Tone, and Coloring/Discoloration of Cured Layer

The organopolysiloxane composition of the present invention is preferably essentially transparent. Specifically, in practice, a film-like cured product with a thickness of 10 to 1000 µm obtained by curing the organopolysiloxane composition of the present invention as a pressure sensitive adhesive layer for a display device must be visually transparent. More objectively, transmittance of light with a wavelength of 450 nm of the pressure sensitive adhesive for a display device containing the cured layer with a thickness of 100 µm may be designed to be 80% or more, and preferably 90% or more and or 95% or more with a value of air set at 100%.

By arbitrarily reducing the amount of the platinum-based metal in the cured layer, the organopolysiloxanes composition of the present invention can be designed such that transparency is not impaired without a color tone thereof greatly changing even when exposed for a long period of time to high temperature and high energy rays such as ultraviolet rays, in addition to the transparency. Specifically, a cured layer with a thickness of 100 µm obtained by curing the organopolysiloxane composition of the present invention can be designed such that immediately after curing, a b* value as measured by a L*a*b* color system as defined in JIS Z 8729 is 0.15 or less, and 0.10 or less. "Having the b* value" means that the cured layer is essentially transparent and is not colored yellow.

The cured layer of the present invention can be designed such that a color tone thereof does not greatly change even if exposed for a long period of time to high temperature or high-energy rays such as ultraviolet rays, and in particular where yellowing problems do not occur. Specifically, even if any of the following evaluations are performed, the cured product with a thickness of 100 µm obtained by curing the organopolysiloxane composition of the present invention can be designed such that a change in the b* value (Δb*) as measured by the L*a*b* color system as defined in JIS Z 8729 before and after evaluations is 0.20 or less, and 0.15 or less. Note that Δb* is an absolute value of a numerical change.
(1) Heat aging evaluation: Cured layer is aged at 105°C for 300 hours
(2) High energy ray irradiation: Ultraviolet light using a mercury lamp (for example, Optical ModuleX manufactured by Ushio, Inc.,) with an intensity of 12 mW/cm² at 365 nm and intensity of 3.5 mW/cm² at 254 nm was irradiated on a sample of the cured layer at room temperature for 75 hours

### Use As Pressure Sensitive Adhesive Layer

The cured layer of the present invention can particularly be used as an essentially transparent pressure sensitive adhesive layer. Herein, "essentially transparent" means that when a film-like cured product with a thickness of 10 to 1000 µm is formed, the cured product is visually transparent. In general, transmittance of light at 450 nm of a film-like cured product with a thickness of 100 µm is easily designed to be 80% or more, and preferably 90% or more and 95% or more when a value of air is set at 100%. Furthermore, in order to improve adhesion with an adherend, a surface treatment such as a primer treatment, corona treatment, etching treatment or plasma treatment, may be performed on a surface of a surface of a base material or the pressure sensitive adhesive layer. However, as described above, the pressure sensitive adhesive layer of the present invention has excellent adhesion to a base material such as a display device. Therefore, adhesion to an adherend may be further improved by adding the steps if necessary, or higher productivity may be achieved by omitting the steps.

The curable organopolysiloxane composition according to the present invention can be cured by heating under the aforementioned temperature conditions after coating on a release liner, and then adhered to a film-like base material, tape-like base material, or sheet-like base material (hereinafter, referred to as "film-like base material") after peeling off the release liner, or can be coated on a film-like base material, and then cured by heating under the aforementioned temperature conditions, to form a pressure sensitive adhesive layer on a surface of the base material. A laminate provided with a cured layer obtained by curing the organopolysiloxane composition according to the present invention on the film-like base material, and in particular, a film-like pressure sensitive adhesive layer, may be used on adhesives tapes, bandages, low temperature supporting bodies, transfer films, labels, emblems, and decorative or explanatory signs. Furthermore, a cured layer obtained by curing the organopolysiloxane composition according to the present invention may be used in assembling automobile parts, toys, electronic circuits, or keyboards. Alternatively, a cured layer, and particularly a film-like pressure sensitive adhesive layer, obtained by curing the organopolysiloxane composition according to the present invention may be used to construct or utilize a laminated touchscreen or flat-panel display.

Examples of types of base materials include paperboard, corrugated cardboard paper, clay coated paper, polyolefin laminated paper, and particularly polyethylene laminated paper, synthetic resin films/sheets, natural fiber materials, synthetic fiber materials, artificial leather materials, and metal foils. Synthetic resin films/sheets are particularly preferable. Examples of synthetic resins include polyimides, polyethylene, polypropylenes, polystyrenes, polyvinyl chlorides, polyvinylidene chlorides, polycarbonates, polyethylene terephthalates, cyclopolyolefins, and nylons. In particular, when heat resistance is required, films of heat resistant synthetic resins such as polyimides, polyether ether ketones, polyethylene naphthalates (PEN), liquid crystal polyarylates, polyamide imides and polyether sulfones, are preferable. On the other hand, for applications requiring visibility such as display devices, transparent base materials, and specifically transparent materials such as polypropylenes, polystyrenes, polyvinylidene chlorides, polycarbonates, polyethylene terephthalates, PENs, and others are preferable.

The base material is preferably film-like or sheet-like. A thickness thereof is not particularly limited, and can be designed to be a desired thickness based on an application. Furthermore, in order to improve adhesion between a supporting film and the pressure sensitive adhesive layer, a supporting film that has been primer treated, corona treated, etching treated, or plasma treated may be used. Furthermore, a material that has been surface treated for scratch prevention, staying prevention, fingerprint adhesion prevention, antiglare, antireflection or antistatic, may be used on an opposite surface from the pressure sensitive adhesive layer surface of the film-like base material.

Gravure coating, offset coating, offset gravure, roller coating using an offset transfer roll coated, reverse roll coating, air knife coating, curtain coating using a curtain flow coater, comma coating, Meyer bar, or other conventionally known method used to form a cured layer can be used as the method of coating to a base material without limitation.

A coating amount can be designed to a desired thickness based on an application of the display device. In particular, when used as a transparent pressure sensitive adhesive layer, a thickness of the pressure sensitive adhesive layer after curing may be 1 to 1000 µm, 5 to 900 µm, or 10 to 800 µm, but is not limited thereto.

When the cured layer obtained by curing organopolysiloxane composition of the present invention is a pressure sensitive adhesive layer, and particularly an essentially transparent pressure sensitive adhesive film, the cured layer is preferably handled as a laminate film adhered in a releasable condition on a film-based material provided with a release layer having a release coding ability. The release layer may be referred to as a release liner, parting layer, or release coating layer. Preferably, a release layer having a release coating ability such as a silicone releasing agent, fluorine releasing agent, alkyd releasing agent, fluorosilicone releasing agent, or a base material itself where fine irregularities are physically formed on a surface of the base material, or that does not easily adhere to the pressure sensitive adhesive layer of the present invention may be used. In particular, the laminate according to the present invention preferably uses a release layer obtained by curing a fluorosilicone releasing agent.

The cure product obtained by curing the organopolysiloxane composition of the present invention is useful as an electronic material, member for displaying device, or member for transducer (including for sensors, speakers, actuators, and generators), and a preferred application of the cured product is a member for displaying device or electronic component. In particular, the cured product in the form of the film, and particularly an essentially transparent pressure sensitive adhesive film is preferably a member for a display or display panel, and is particularly useful in so-called touch panel applications where a device, and particularly an electronic device can be operated by touching a screen with a fingertip.

In particular, the pressure sensitive adhesive layer obtained by curing the organopolysiloxane composition of the present invention can achieve the same pressure sensitive adhesive properties as a conventional silicon pressure sensitive adhesive layer, and can improve adhesion to a base material such as a displaying device without causing curing defects and problems with reduction in curability.

### Member for Display or Display Panel

The cure product obtained by curing organopolysiloxane composition of the present invention can be used to construct and utilize a laminated touchscreen or flat-panel display. A specific method of use thereof can be used without particular limitations to a conventionally known use method of a pressure sensitive adhesive layer (and particularly silicone PSA).

For example, the cured product obtained by curing organopolysiloxane composition of the present invention can be used to manufacture a displaying device such as a touch panel or as a pressure sensitive adhesive layer or optically transparent silicone pressure sensitive adhesive film as disclosed in the aforementioned Japanese PCT Application 2014-522436 (Patent Document 1), Japanese PCT Application 2013-512326 (Patent Document 2). Specifically, the cured product obtained by curing the organopolysiloxane composition of the present invention can be used without particular limitation as a cursor sensitive adhesive film or pressure sensitive adhesive layer according to Patent Document 2.

In one example, a touch panel according to the present invention may be a touch panel containing: a base material such as a conductive plastic film where the conductive layer is formed on one surface and a cured layer obtained by curing the curable organopolysiloxane composition of the present invention adhered to a side where the conductive layer is formed or on a surface on an opposite side. The base material is preferably a sheet-like or film-like base material, and examples include resin films and glass sheets. Furthermore, the conductive plastic film may be a resin film or glass sheet, and particularly a polyethylene terephthalate film, where an ITO layer is formed on a surface. These are disclosed in the aforementioned Japanese PCT Application 2013-512326 (Patent Document 2).

In addition, the cured product obtained by curing the organopolysiloxane composition of the present invention may be used as an adhesive film for a polarizing plate used to manufacture displaying device such as a touch panel , or may be used as a pressure sensitive adhesive layer used to bond together a display module and a touch panel described in JP 2013-065009 A.

### Industrial Applicability

Applications for the curable organopolysiloxane composition of the present invention and cured product obtained by curing the composition are not limited to those disclosed above. A pressure sensitive adhesive film containing the cured product obtained by curing the composition can be used in various displaying devices for displaying a character, symbol, or image, such as a television receiver, a monitor for computer, a monitor for a portable information terminal, a monitoring monitor, a video camera, a digital camera, a mobile phone, a portable information terminal, a display for an instrument panel for an automobile or the like, a display for an instrument panel for various facilities, equipment, and devices, and automatic vending machine, and automatic teller machine, and in-vehicle displaying device, and in-vehicle transmission screen. A surface shape of the displaying device may be a curved surface shape or a curved shape and not a flat shape. Examples include a curved display or curved transmission screen used in automobiles (including electric automobiles) and aircraft, in addition to various flat panel displays (FPD). Furthermore, the displaying devices can display an icon for executing a function or program and a notification display for electronic mail/program, or an operating button of various devices such as a car navigation device, audio device, air conditioner, or on a screen or display. A touch panel function may be added where an input operation is enabled by touching the icon, notification display, or operating button using a finger. The device can apply displaying devices such as a CRT display, liquid crystal display, plasma display, organic EL display, inorganic EL display, LED display, surface electrolytic display (SED) and field emission display (FED), and a touch panel utilizing these devices.

The pressure sensitive adhesive layer obtained by curing the organopolysiloxane composition of the present invention is preferably essentially transparent, does not cause curing defects and curability reduction problems, and has excellent adhesion to a base material such as various displaying devices. Therefore, the pressure sensitive adhesive layer can suitably be used in a displaying device for a vehicle with favorable visibility and operability of display contents over a long period of time, and particularly the displaying device for a vehicle optionally having a touch panel function, provided with a curved surface screen or a curved surface display. For example, a displaying device for a vehicle provided with a curved display surface is disclosed in JP 2017-047767 A, JP 2014-182335 A, JP 2014-063064 A, JP 2013-233852 A. However, the pressure sensitive adhesive layer according to the present invention can be suitably applied to or replace a portion or all of an adhesive layer or pressure sensitive adhesive layer where transparency is required in these documents. Furthermore, it goes without saying that the organopolysiloxane composition with pressure sensitive adhesive layer forming properties of the present invention can be used by replacing an adhesive layer or pressure sensitive adhesive layer where transparency is required that is currently used in other conventionally known curved surface displaying devices. A displaying device design or member thickness is preferably adjusted by a conventionally known technique in order to further advantageously utilize the pressure sensitive adhesive layer of the present invention.

Note that a transparent film-like base material provided with the pressure sensitive adhesive layer of the present invention may be used for scratch prevention, stain prevention, fingerprint adhesion prevention, antistatic prevention, reflection prevention and peeping prevention, of the display surfaces.

### Examples

Examples and comparative examples will be described below. Note that "cured" in the examples and comparative examples means that compositions were completely cured under various curing conditions.

### Preparation of Curable Organopolysiloxane Composition

Curable organopolysiloxane compositions described in the examples and comparative examples were prepared using components shown in Table 1.

### Adhesive Force Measurement

The compositions were coated such that a thickness after curing was 50 *µ*m on a PET film (manufactured by Toray Industries, Inc., Product name: Lumirror (registered trademark) #50-T60, Thickness: 50 *µ*m), and then cured at 120° C. The sample was cut into a width of 20 mm, and then a surface of a pressure sensitive adhesive layer was adhered to a PMMA sheet (manufactured by Paltec, Acrylite L001, 50 × 120 × 2 mm) or a glass sheet (manufactured by Paltec, float glass, JIS R3202, 75 × 150 × 3 mm) using a roller to obtain a test piece. An adhesive force (measurement at width of 20 mm converted to display unit N/25 mm) was measured at a tensile rate of 300 mm/min using a 180° peeling test method in accordance with JIS Z0237 using an Orientec RTC-1210 tensile test after allowing to stand for 30 minutes at room temperature when using the PMMA sheet and performing aging for 80 hours at 100°C when using the glass sheet. The same adhesive force measuring test was performed three times for the compositions, and an average value thereof was shown.

Materials of the curable organopolysiloxane compositions are shown in Table 1. Note that the viscosity or degree of plasticity of the components were measured at room temperature by the following methods.

### Viscosity

The viscosity (mPa·s) is a value measured using a rotational viscometer in accordance with JIS K7117-1, and the kinematic viscosity (mm2/s) is a value measured by an Ubbelohde viscometer in accordance with JIS Z8803.

### Degree of Plasticity

The degree of plasticity is indicated by a value (thickness when a load of 1 kgf is applied for 3 minutes on a 4.2 g spherical sample is read up to 1/100 mm, and the numerical value is multiplied by 100 at 25° C) measured in accordance with a method specified JIS K 6249.

Table 1 Components of Curable Organopolysiloxane Composition

**Table 1**

| Component Name | Component |
|---|---|
| Component A-a | Vinyl functional polydimethyl siloxane, |
| | Gum-like (degree of plasticity 134), Amount of vinyl: 0.018% |
| Component A-b | Vinyl functional polydimethyl siloxane, |
| | Gum-like (degree of plasticity 152), Amount of vinyl: 0.013% |
| Component A-c | Vinyl functional polydimethyl siloxane, |
| | Viscosity: 350 mPa·s, Amount of vinyl: 0.474% |
| Component B | MQ silicone resin containing (CH3)3SiO1/2 unit, SiO4/2 unit, and hydroxyl group, Amount of OH: 1.0% |
| | Xylene solution (solid content: 62.6%) |
| Component C | Methylhydrogen polysiloxane blocked with a trimethylsiloxy group at both ends, Viscosity: 20 mm2/s, Amount of SiH: 1.59% |
| Component D-a | Platinum hydrosilylation reaction catalyst, Containing 0.64% of platinum |
| Component D-b | Platinum hydrosilylation reaction catalyst, Containing 0.73% of platinum |
| Component E-a | 3,5-dimethyl-1-hexyn-3-ol |
| Component E-b | 2-ethynyl-4-methyl-2-pentene |

| | |
|---|---|
| Note) Each % in Table 1 indicates wt.%. | |

### Example 1

20.5 parts by weight of the vinyl-functional polydimethyl siloxane of component A-b, 0.004 parts by weight of the vinyl-functional polydimethyl siloxane of component A-c, 60.3 parts by weight of the MQ silicone resin of component B, 0.20 parts by weight of the methylhydrogen polysiloxane blocked with a trimethylsiloxy group at both ends of component C, 0.050 parts by weight of the curing retarder of component E-a, and 19.2 parts by weight of toluene were mixed well at room temperature, and then 0.10 parts by weight of the platinum hydrosilylation reaction catalyst of component D-b was added to the mixture to obtain a curable organopolysiloxane composition. The molar ratio (SiH/V ratio) in the component (C) with regard to the number of alkenyl groups in the component (A) was 29, and the amount of platinum metals with regard to the solid content was 10 ppm.

The composition was cured for 3 minutes at a curing temperature of 120° C. The adhesive force with regard to a PMMA sheet was measured by the method described above (adhesive force measurement), and evaluation results thereof were shown in Table 2.

### Example 2

25.6 parts by weight of the vinyl-functional polydimethyl siloxane of component A-a, 0.04 parts by weight of the vinyl-functional polydimethyl siloxane of component A-c, 56.4 parts by weight of the MQ silicone resin of component B, 0.34 parts by weight of the methylhydrogen polysiloxane blocked with a trimethylsiloxy group at both ends of component C, 0.21 parts by weight of the curing retarder of component E-b, and 17.6 parts by weight of toluene were mixed well at room temperature, and then 0.90 parts by weight of the platinum hydrosilylation reaction catalyst of component D-b was added to the mixture to obtain a curable organopolysiloxane composition. The SiH/Vi ratio was 30, and the amount of platinum metals with regard to the solid content was 100 ppm.

The composition was cured for 2 minutes at a curing temperature of 120° C. Aging was performed for 80 hours at 100° C, and then the adhesive force with regard to a glass sheet was measured by the method described above (adhesive force measurement). Evaluation results thereof were shown in Table 3.

### Example 3

25.6 parts by weight of the vinyl-functional polydimethyl siloxane of component A-a, 0.74 parts by weight of the vinyl-functional polydimethyl siloxane of component A-c, 56.4 parts by weight of the MQ silicone resin of component B, 0.57 parts by weight of the methylhydrogen polysiloxane blocked with a trimethylsiloxy group at both ends of component C, 0.21 parts by weight of the curing retarder of component E-b, and 17.6 parts by weight of toluene were mixed well at room temperature, and then 0.90 parts by weight of the platinum hydrosilylation reaction catalyst of component D-a was added to the mixture to obtain a curable organopolysiloxane composition. The SiH/Vi ratio was 30, and the amount of platinum metals with regard to the solid content was 100 ppm.

The composition was cured for 2 minutes at a curing temperature of 120° C. Aging was performed for 80 hours at 100° C, and then the adhesive force with regard to a glass sheet was measured by the method described above (adhesive force measurement). Evaluation results thereof were shown in Table 3.

### Example 4

21.6 parts by weight of the vinyl-functional polydimethyl siloxane of component A-a, 0.04 parts by weight of the vinyl-functional polydimethyl siloxane of component A-c, 63.2 parts by weight of the MQ silicone resin of component B, 0.20 parts by weight of the methylhydrogen polysiloxane blocked with a trimethylsiloxy group at both ends of component C, 0.20 parts by weight of the curing retarder of component E-b, and 14.9 parts by weight of toluene were mixed well at room temperature, and then 0.90 parts by weight of the platinum hydrosilylation reaction catalyst of component D-b was added to the mixture to obtain a curable organopolysiloxane composition. The SiH/Vi ratio was 21.7, and the amount of platinum metals with regard to the solid content was 100 ppm.

The composition was cured for 3 minutes at a curing temperature of 120° C. The adhesive force with regard to a PMMA sheet was measured by the method described above (adhesive force measurement), and evaluation results thereof were shown in Table 2.

### Example 5

20.5 parts by weight of the vinyl-functional polydimethyl siloxane of component A-b, 0.16 parts by weight of the vinyl-functional polydimethyl siloxane of component A-c, 60.3 parts by weight of the MQ silicone resin of component B, 0.20 parts by weight of the methylhydrogen polysiloxane blocked with a trimethylsiloxy group at both ends of component C, 0.050 parts by weight of the curing retarder of component E-a, and 19.2 parts by weight of toluene were mixed well at room temperature, and then 0.20 parts by weight of the platinum hydrosilylation reaction catalyst of component D-a was added to the mixture to obtain a curable organopolysiloxane composition. The SiH/Vi ratio was 24.3, and the amount of platinum metals with regard to the solid content was 22 ppm.

The composition was cured for 3 minutes at a curing temperature of 120° C. The adhesive force with regard to a PMMA sheet was measured by the method described above (adhesive force measurement), and evaluation results thereof were shown in Table 2.

### Example 6

20.5 parts by weight of the vinyl-functional polydimethyl siloxane of component A-b, 0.01 parts by weight of the vinyl-functional polydimethyl siloxane of component A-c, 60.3 parts by weight of the MQ silicone resin of component B, 0.20 parts by weight of the methylhydrogen polysiloxane blocked with a trimethylsiloxy group at both ends of component C, 0.050 parts by weight of the curing retarder of component E-a, and 19.2 parts by weight of toluene were mixed well at room temperature, and then 0.20 parts by weight of the platinum hydrosilylation reaction catalyst of component D-b was added to the mixture to obtain a curable organopolysiloxane composition. The SiH/Vi ratio was 30.9, and the amount of platinum metals with regard to the solid content was 22 ppm.

The composition was cured for 3 minutes at a curing temperature of 120° C. The adhesive force with regard to a PMMA sheet was measured by the method described above (adhesive force measurement), and evaluation results thereof were shown in Table 2.

### Reference Example

21.6 parts by weight of the vinyl-functional polydimethyl siloxane of component A-a, 0.74 parts by weight of the vinyl-functional polydimethyl siloxane of component A-c, 63.2 parts by weight of the MQ silicone resin of component B, 0.20 parts by weight of the methylhydrogen polysiloxane blocked with a trimethylsiloxy group at both ends of component C, 0.20 parts by weight of the curing retarder of component E-b, and 14.9 parts by weight of toluene were mixed well at room temperature, and then 0.90 parts by weight of the platinum hydrosilylation reaction catalyst of component D-a was added to the mixture to obtain a curable organopolysiloxane composition. The SiH/Vi ratio was 11.7, and the amount of platinum metals with regard to the solid content was 100 ppm.

The composition was cured for 3 minutes at a curing temperature of 120° C. As a result of measuring the adhesive force with regard to a PMMA sheet by the method described above (adhesive force measurement), the adhesive force was 20.5 N/25 mm.

### Comparative Example 1

20.5 parts by weight of the vinyl-functional polydimethyl siloxane of component A-b, 1.064 parts by weight of the vinyl-functional polydimethyl siloxane of component A-c, 60.3 parts by weight of the MQ silicone resin of component B, 0.20 parts by weight of the methylhydrogen polysiloxane blocked with a trimethylsiloxy group at both ends of component C, 0.050 parts by weight of the curing retarder of component E-a, and 19.2 parts by weight of toluene were mixed well at room temperature, and then 0.10 parts by weight of the platinum hydrosilylation reaction catalyst of component D-b was added to the mixture to obtain a curable organopolysiloxane composition. The SiH/Vi ratio was 10, and the amount of platinum metals with regard to the solid content was 10 ppm.

The composition was cured for 3 minutes at a curing temperature of 120° C. The adhesive force with regard to a PMMA sheet was measured by the method described above (adhesive force measurement), and evaluation results thereof were shown in Table 2.

### Comparative Example 2

25.6 parts by weight of the vinyl-functional polydimethyl siloxane of component A-a, 0.74 parts by weight of the vinyl-functional polydimethyl siloxane of component A-c, 56.4 parts by weight of the MQ silicone resin of component B, 0.21 parts by weight of the methylhydrogen polysiloxane blocked with a trimethylsiloxy group at both ends of component C, 0.21 parts by weight of the curing retarder of component E-b, and 17.6 parts by weight of toluene were mixed well at room temperature, and then 0.90 parts by weight of the platinum hydrosilylation reaction catalyst of component D-a was added to the mixture to obtain a curable organopolysiloxane composition. The SiH/Vi ratio was 10.7, and the amount of platinum metals with regard to the solid content was 100 ppm.

The composition was cured for 2 minutes at a curing temperature of 120° C. Aging was performed for 80 hours at 100° C, and then the adhesive force with regard to a glass sheet was measured by the method described above (adhesive force measurement). Evaluation results thereof were shown in Table 3.

### Comparative Example 3

25.6 parts by weight of the vinyl-functional polydimethyl siloxane of component A-a, 0.04 parts by weight of the vinyl-functional polydimethyl siloxane of component A-c, 56.4 parts by weight of the MQ silicone resin of component B, 0.21 parts by weight of the methylhydrogen polysiloxane blocked with a trimethylsiloxy group at both ends of component C, 0.21 parts by weight of the curing retarder of component E-b, and 17.6 parts by weight of toluene were mixed well at room temperature, and then 0.90 parts by weight of the platinum hydrosilylation reaction catalyst of component D-a was added to the mixture to obtain a curable organopolysiloxane composition. The SiH/Vi ratio was 18.4, and the amount of platinum metals with regard to the solid content was 100 ppm.

The composition was cured for 2 minutes at a curing temperature of 120° C. Aging was performed for 80 hours at 100° C, and then the adhesive force with regard to a glass sheet was measured by the method described above (adhesive force measurement). Evaluation results thereof were shown in Table 3.

Table 2 Adhesive force of cured layer with 50 µm film thickness with regard to PMMA sheet

**Table 2**

| Composition | Example 1 | Example 4 | Example 5 | Example 6 | Comparative Example 1 |
|---|---|---|---|---|---|
| SiH/Vi ratio | 29 | 21.7 | 24.3 | 30.9 | 10 |
| Adhesive force (N/25 mm) | 20.5 | 20.7 | 21.7 | 22.0 | 16.9 |

Table 3 Adhesive force of cured layer with 50 µm film thickness with regard to glass sheet (after aging at 100°C)

**Table 3**

| Physical Properties | Aging at 100°C for 30 hours | | | | Aging at 100°C for 80 hours | | | |
|---|---|---|---|---|---|---|---|---|
| Composition | Example 2 | Example 3 | Comparative Example 2 | Comparative Example 3 | Example 2 | Example 3 | Comparative Example 2 | Comparative Example 3 |
| SiH/Vi ratio | 30 | 30 | 10.7 | 18.4 | 30 | 30 | 10.7 | 18.4 |
| Adhesive force (N/25 mm) | 26.7 | 26.1 | 25.6 | 26.0 | 37.2 | 38.1 | 27.5 | 27.2 |

The compositions according to the examples and cured layers thereof have excellent curability, particularly when an amount of a curing catalyst is low (platinum amount: 10 ppm or 22 ppm), as shown in Table 2. Furthermore, as shown in Table 3, the compositions according to the examples have excellent adhesion to a polar surface such as glass. Furthermore, as shown by the adhesive force of the compositions according to the examples in Table 2 and the adhesive force of the reference examples, the adhesive force can be designed within a scope equivalent to a silicone pressure sensitive adhesive with an SiH/Vi ratio that is less than 20 for the compositions according to the present invention, and in practice, a sufficient adhesive force can be achieved.

## Claims

1. An organopolysiloxane composition with pressure sensitive adhesive layer forming properties, comprising:
(A) an organopolysiloxane having an average of more than one alkenyl group in a molecule, comprising a mixture of (A1) a raw rubber-like organopolysiloxane containing an alkenyl group, having a viscosity at 25°C of 100,000 mPa·s or more, or a degree of plasticity as measured in accordance with a method stipulated in JIS K6249 within a range of 50 to 200, and (A2) an organopolysiloxane containing an alkenyl group with a viscosity at 25°C that is less than 100,000 mPa·s, and a mass ratio of both components is within a range of 50:50 to 100:0, and an amount of a vinyl (CH₂ = CH) moiety in an alkenyl group in component (A1) is within a range of 0.005 to 0.400 wt.%;
(B) an organopolysiloxane resin wherein at least a portion of component (B) is (B1) a resin that contains an R₃SiO_{1/2} unit (M unit) and an SiO_{4/2} unit (Q unit), and may have a hydroxyl group or hydrolyzable group (where R represents a monovalent organic group and 90 mol% or more of R is a phenyl group or alkyl group with 1 to 6 carbon atoms); and component (B) is within a range of 1 to 500 parts by mass with regard to 100 parts by mass of a sum of component (A) and component (C) in the composition;
(C) an organohydrogen polysiloxane having at least two Si-H bonds in a molecule;
(D) a hydrosilylation reaction catalyst; and optionally
(E) at least one type of curing retarder; wherein
an amount of the component (C) is an amount such that a ratio (molar ratio) of an amount (moles) of SiH groups in component (C) with regard to a sum of an amount (moles) of alkenyl groups in component (A) and amount (moles) of alkenyl groups in component (B) is 20 to 60; and
each viscosity is measured using a rotational viscometer in accordance with JIS K7117-1.

2. The organopolysiloxane composition with pressure sensitive adhesive layer forming properties according to claim 1, wherein component (A) is a mixture of component (A1) and component (A2) and the mass ratio of components (A1) and (A2) is within a range of 75:25 to 100:0.

3. The organopolysiloxane composition with pressure sensitive adhesive layer forming properties according to any one of claims 1 to 2, wherein a viscosity of the composition 8 hours at room temperature after preparing the composition is within 1.5 times a viscosity of the composition immediately after preparing the composition, and curing is possible at 80 to 200°C.

4. The organopolysiloxane composition with pressure sensitive adhesive layer forming properties according to any one of claims 1 to 3, wherein a cured layer having a thickness of 100 µm obtained by curing the composition is transparent, and a polymethyl methacrylate sheet with a thickness of 2 mm provided with a 50 µm thick cured layer obtained by curing the composition has an adhesive force as measured at a tensile rate of 300 mm/min using a 180° peeling test method in accordance with JIS Z 0237 of 0.02 N/25 mm or more.

5. A pressure sensitive adhesive layer obtained by curing the organopolysiloxane composition with pressure sensitive adhesive layer forming properties according to any one of claims 1 to 4 or pressure sensitive adhesive composition, comprising the organopolysiloxane composition with pressure sensitive adhesive layer forming properties according to any one of claims 1 to 4.

6. The pressure sensitive adhesive layer according to claim 5, which is film-like and transparent.

7. A laminate, comprising a pressure sensitive adhesive layer obtained by curing the organopolysiloxane composition with pressure sensitive adhesive layer forming properties according to any one of claims 1 to 4 on a film-like base material.

8. The laminate according to claim 7, wherein a release layer for the pressure sensitive adhesive layer is provided on 1 or more film-like base materials.

9. The laminate according to claim 7 or 8, comprising:
a film-like base material;
a first release layer formed on the film-like base material;
a pressure sensitive adhesive layer formed by coating and curing the organopolysiloxane composition with pressure sensitive adhesive layer forming properties according to any one of claims 1 to 6 on the release layer; and
a second release layer laminated on the pressure sensitive adhesive layer.

10. A member for a displaying device or an electronic material, obtained by curing the organopolysiloxane composition with pressure sensitive adhesive layer forming properties according to any one of claims 1 to 4.

11. An electronic component or displaying device, comprising the member for a displaying device or the electronic material according to claim 10.

12. A displaying panel or a display, comprising the film-like and transparent pressure sensitive adhesive layer according to claim 6.

13. A touch panel, comprising a pressure sensitive adhesive layer obtained by curing the organopolysiloxane composition with pressure sensitive adhesive layer forming properties according to any one of claims 1 to 4 adhered to a base material where a conductive layer is formed on one surface and to the conductive layer of the base material or on a surface opposite thereof.

14. The touch panel according to claim 13, wherein the base material where the conductive layer is formed is a resin film or glass sheet where an ITO layer is formed on one surface.

## Patentansprüche

1. Organopolysiloxanzusammensetzung mit Haftklebstoffschichtausbildungseigenschaften, umfassend:
(A) ein Organopolysiloxan, das einen Durchschnitt von mehr als einer Alkenylgruppe in einem Molekül aufweist, umfassend eine Mischung aus (A1) einem rohkautschukartigen Organopolysiloxan, das eine Alkenylgruppe enthält, die eine Viskosität bei 25 °C von 100.000 mPa·s oder mehr oder einen Plastizitätsgrad, wie nach einem Verfahren gemessen, das in JIS K6249 festgelegt ist, innerhalb eines Bereichs von 50 bis 200 aufweist, und (A2) ein Organopolysiloxan, das eine Alkenylgruppe mit einer Viskosität bei 25 °C enthält, das weniger als 100.000 mPa·s ist, und ein Massenverhältnis beider Komponenten innerhalb des Bereichs von 50 : 50 bis 100 : 0 liegt, und eine Menge eines Vinyl-(CH₂ = CH)-Rests in einer Alkenylgruppe in Komponente (A1) innerhalb eines Bereichs von 0,005 bis 0,400 Gew.-% liegt;
(B) ein Organopolysiloxanharz, wobei mindestens ein Anteil von Komponente (B) (B1) ein Harz ist, das eine R₃SiO_{1/2}-Einheit (M-Einheit) und eine SiO_{4/2}-Einheit (Q-Einheit) enthält und eine Hydroxylgruppe oder hydrolysierbare Gruppe (wobei R eine einwertige organische Gruppe darstellt und 90 Mol.-% oder mehr von R eine Phenylgruppe oder Alkylgruppe mit 1 bis 6 Kohlenstoffatomen sind) aufweisen kann; und Komponente (B) innerhalb eines Bereichs von 1 bis 500 Massenteilen in Bezug auf 100 Massenteile einer Summe aus Komponente (A) und Komponente (C) in der Zusammensetzung liegt;
(C) ein Organohydrogenpolysiloxan, das mindestens zwei Si-H-Bindungen in einem Molekül aufweist;
(D) einen Hydrosilylierungsreaktionskatalysator; und optional
(E) mindestens eine Art von Härtungsverzögerer; wobei
eine Menge der Komponente (C) eine derartige Menge ist, dass ein Verhältnis (Molverhältnis) einer Menge (Mol) an SiH-Gruppen in Komponente (C) in Bezug auf eine Summe einer Menge (Mol) an Alkenylgruppen in Komponente (A) und einer Menge (Mol) an Alkenylgruppen in Komponente (B) 20 bis 60 beträgt; und
jede Viskosität unter Verwendung eines Rotationsviskosimeters gemäß JIS K7117-1 gemessen wird.

2. Organopolysiloxanzusammensetzung mit Haftklebstoffschichtausbildungseigenschaften nach Anspruch 1, wobei Komponente (A) eine Mischung aus Komponente (A1) und Komponente (A2) ist und das Massenverhältnis der Komponenten (A1) und (A2) innerhalb eines Bereichs von 75 : 25 bis 100 : 0 liegt.

3. Organopolysiloxanzusammensetzung mit Haftklebstoffschichtausbildungseigenschaften nach einem der Ansprüche 1 bis 2, wobei eine Viskosität der Zusammensetzung 8 Stunden bei Raumtemperatur nach einem Herstellen der Zusammensetzung innerhalb eines 1,5-Fachen einer Viskosität der Zusammensetzung unmittelbar nach dem Herstellen der Zusammensetzung liegt und ein Aushärten bei 80 bis 200 °C möglich ist.

4. Organopolysiloxanzusammensetzung mit Haftklebstoffschichtausbildungseigenschaften nach einem der Ansprüche 1 bis 3, wobei eine ausgehärtete Schicht, die eine Dicke von 100 µm aufweist, die durch Aushärten der Zusammensetzung erhalten wird, transparent ist, und eine Polymethylmethacrylatplatte mit einer Dicke von 2 mm, die mit einer 50 µm dicken ausgehärteten Schicht versehen ist, die durch Aushärten der Zusammensetzung erhalten wird, eine Klebekraft aufweist, wie bei einer Zuggeschwindigkeit von 300 mm/min unter Verwendung eines 180°-Abziehtestverfahrens gemäß JIS Z 0237 von 0,02 N/25 mm oder mehr gemessen.

5. Haftklebstoffschicht, die durch Aushärten der Organopolysiloxanzusammensetzung mit Haftklebstoffschichtausbildungseigenschaften nach einem der Ansprüche 1 bis 4 erhalten wird, oder Haftklebstoffzusammensetzung,
umfassend die Organopolysiloxanzusammensetzung mit Haftklebstoffschichtausbildungseigenschaften nach einem der Ansprüche 1 bis 4.

6. Haftklebstoffschicht nach Anspruch 5, die folienartig und transparent ist.

7. Laminat, umfassend eine Haftklebstoffschicht, die durch Aushärten der Organopolysiloxanzusammensetzung mit Haftklebstoffschichtausbildungseigenschaften nach einem der Ansprüche 1 bis 4 auf einem folienartigen Basismaterial erhalten wird.

8. Laminat nach Anspruch 7, wobei eine Trennschicht für die Haftklebstoffschicht auf 1 oder mehreren folienartigen Basismaterialien bereitgestellt ist.

9. Laminat nach Anspruch 7 oder 8, umfassend:
ein folienartiges Basismaterial;
eine erste Trennschicht, die auf dem folienartigen Basismaterial ausgebildet ist;
eine Haftklebstoffschicht, die durch Auftragen und Aushärten der Organopolysiloxanzusammensetzung mit Haftklebstoffschichtausbildungseigenschaften nach einem der Ansprüche 1 bis 6 auf die Trennschicht ausgebildet wird; und
eine zweite Trennschicht, die auf die Haftklebstoffschicht laminiert ist.

10. Element für eine Anzeigevorrichtung oder ein elektronisches Material, das durch Aushärten der Organopolysiloxanzusammensetzung mit Haftklebstoffschichtausbildungseigenschaften nach einem der Ansprüche 1 bis 4 erhalten wird.

11. Elektronische Komponente oder Anzeigevorrichtung, umfassend das Element für eine Anzeigevorrichtung oder das elektronische Material nach Anspruch 10.

12. Anzeigefeld oder Anzeige, umfassend die folienartige und transparente Haftklebstoffschicht nach Anspruch 6.

13. Berührungsfeld, umfassend eine Haftklebstoffschicht, die durch Aushärten der Organopolysiloxanzusammensetzung mit Haftklebstoffschichtausbildungseigenschaften nach einem der Ansprüche 1 bis 4 erhalten wird, die auf einem Basismaterial haftet, auf dem eine leitfähige Schicht auf einer Oberfläche und an die leitfähige Schicht des Basismaterials oder auf einer Oberfläche gegenüberliegend davon ausgebildet ist.

14. Berührungsfeld nach Anspruch 13, wobei das Basismaterial, auf dem die leitfähige Schicht ausgebildet ist, eine Harzfolie oder eine Glasplatte ist, auf der eine ITO-Schicht auf einer Oberfläche ausgebildet ist.

## Revendications

1. Composition d'organopolysiloxane ayant des propriétés de formation de couche adhésive sensible à la pression, comprenant :
(A) un organopolysiloxane ayant une moyenne de plus d'un groupe alcényle dans une molécule, comprenant un mélange de (A1) un organopolysiloxane de type caoutchouc brut contenant un groupe alcényle, ayant une viscosité à 25 °C de 100 000 mPa·s ou plus, ou un degré de plasticité mesuré conformément à un procédé stipulé dans la norme JIS K6249 compris entre 50 et 200, et (A2) un organopolysiloxane contenant un groupe alcényle ayant une viscosité à 25 °C qui est inférieure à 100 000 mPa·s, et un rapport de masse des deux composants compris entre 50:50 et 100:0, et une quantité d'un groupement vinyle (CH₂ = CH) dans un groupe alcényle du composant (A1) est comprise entre 0,005 et 0,400 % en poids ;
(B) une résine organopolysiloxane dans laquelle au moins une partie du composant (B) est (B1) une résine qui contient une unité R₃SiO_{1/2} (unité M) et une unité SiO_{4/2} (unité Q), et peut avoir un groupe hydroxyle ou un groupe hydrolysable (où R représente un groupe organique monovalent et 90 % mol ou plus de R est un groupe phényle ou un groupe alkyle avec 1 à 6 atomes de carbone) ; et le composant (B) est compris entre 1 et 500 parties en masse par rapport à 100 parties en masse d'une somme du composant (A) et du composant
(C) dans la composition ;
(C) un polysiloxane organohydrogène ayant au moins deux liaisons Si-H dans une molécule ;
(D) un catalyseur de réaction d'hydrosilylation ; et éventuellement
(E) au moins un type de retardateur de durcissement ; dans laquelle
une quantité du composant (C) est une quantité telle qu'un rapport (rapport molaire) d'une quantité (moles) de groupes SiH dans le composant (C) par rapport à une somme d'une quantité (moles) de groupes alcényles dans le composant (A) et d'une quantité (moles) de groupes alcényles dans le composant (B) est compris entre 20 et 60 ; et
chaque viscosité est mesurée à l'aide d'un viscosimètre rotatif conformément à la norme JIS K7117-1.

2. Composition d'organopolysiloxane ayant des propriétés de formation de couche adhésive sensible à la pression selon la revendication 1, dans laquelle le composant (A) est un mélange du composant (A1) et du composant (A2) et le rapport de masse des composants (A1) et (A2) est compris entre 75:25 et 100:0.

3. Composition d'organopolysiloxane ayant des propriétés de formation de couche adhésive sensible à la pression selon l'une quelconque des revendications 1 à 2, dans laquelle une viscosité de la composition 8 heures à température ambiante après la préparation de la composition est inférieure à 1,5 fois une viscosité de la composition immédiatement après la préparation de la composition, et le durcissement est possible à une température comprise entre 80 et 200 °C.

4. Composition d'organopolysiloxane ayant des propriétés de formation de couche adhésive sensible à la pression selon l'une quelconque des revendications 1 à 3, dans laquelle une couche durcie ayant une épaisseur de 100 µm obtenue par durcissement de la composition est transparente, et une feuille de polyméthacrylate de méthyle d'une épaisseur de 2 mm pourvue d'une couche durcie d'une épaisseur de 50 µm obtenue par durcissement de la composition a une force adhésive telle que mesurée à une vitesse de traction de 300 mm/min à l'aide d'un procédé d'essai de pelage à 180° conformément à la norme JIS Z 0237 de 0,02 N/25 mm ou plus.

5. Couche adhésive sensible à la pression obtenue par durcissement de la composition d'organopolysiloxane ayant des propriétés de formation de couche adhésive sensible à la pression selon l'une quelconque des revendications 1 à 4 ou composition adhésive sensible à la pression,
comprenant la composition d'organopolysiloxane ayant des propriétés de formation de couche adhésive sensible à la pression selon l'une quelconque des revendications 1 à 4.

6. Couche adhésive sensible à la pression selon la revendication 5, qui est de type film et est transparente.

7. Stratifié, comprenant une couche adhésive sensible à la pression obtenue par durcissement de la composition d'organopolysiloxane ayant des propriétés de formation de couche adhésive sensible à la pression selon l'une quelconque des revendications 1 à 4 sur un matériau de base de type de film.

8. Stratifié selon la revendication 7, dans lequel une couche antiadhésive pour la couche adhésive sensible à la pression est fournie sur un ou plusieurs matériaux de base de type film.

9. Stratifié selon la revendication 7 ou 8, comprenant :
un matériau de base de type film ;
une première couche antiadhésive formée sur le matériau de base de type film ;
une couche adhésive sensible à la pression formée par revêtement et durcissement de la composition d'organopolysiloxane ayant des propriétés de formation de couche adhésive sensible à la pression selon l'une quelconque des revendications 1 à 6 sur la couche antiadhésive ; et
une seconde couche antiadhésive stratifiée sur la couche adhésive sensible à la pression.

10. Élément pour un dispositif d'affichage ou un matériau électronique, obtenu par durcissement de la composition d'organopolysiloxane ayant des propriétés de formation de couche adhésive sensible à la pression selon l'une quelconque des revendications 1 à 4.

11. Composant électronique ou dispositif d'affichage, comprenant l'élément pour un dispositif d'affichage ou le matériau électronique selon la revendication 10.

12. Panneau d'affichage ou écran comprenant la couche adhésive sensible à la pression transparente et de type film selon la revendication 6.

13. Panneau tactile, comprenant une couche adhésive sensible à la pression obtenue par durcissement de la composition organopolysiloxane ayant des propriétés de formation de couche adhésive sensible à la pression selon l'une quelconque des revendications 1 à 4, collée à un matériau de base où une couche conductrice est formée sur une surface et sur la couche conductrice du matériau de base ou sur une surface opposée à celle-ci.

14. Panneau tactile selon la revendication 13, dans lequel le matériau de base sur lequel la couche conductrice est formée est un film de résine ou une plaque de verre sur laquelle une couche d'oxyde d'étain et d'indium, ITO, est formée sur une surface.
